Europäisches Patentamt

European Patent Office

Office européen des brevets

(11) Veröffentlichungsnummer: **0 106 247**
B1

(12) **EUROPÄISCHE PATENTSCHRIFT**

(45) Veröffentlichungstag der Patentschrift:
20.12.89

(51) Int. Cl.⁴: **H 04 M 19/00**

(21) Anmeldenummer: 83109822.3

(22) Anmeldetag: 30.09.83

(54) Fernsprechanlage.

(30) Priorität: 11.10.82 DE 3237652

(43) Veröffentlichungstag der Anmeldung:
25.04.84 Patentblatt 84/17

(45) Bekanntmachung des Hinweises auf die Patenterteilung:
20.12.89 Patentblatt 89/51

(84) Benannte Vertragsstaaten:
AT DE FR GB IT SE

(56) Entgegenhaltungen:
GB-A-2 102 249
US-A-4 272 656

INTERNATIONAL SWITCHING SYMPOSIUM, 21.-25.
September 1981, Montreal, "Session 13 B, paper 3",
Seiten 1-7, New York, US, F. MELINDO et al.: "LSI
components for digital line stages"
INTERNATIONAL SWITCHING SYMPOSIUM, 21.-25.
September 1981, Montreal, "Session 14 B, paper 3",
Seiten 1-7, New York, US, J. COTTON et al.:
"Technology and techniques in the line circuit of a fully
digital switching system"
ELECTRICAL COMMUNICATION, Band 54, Nr. 3, 20.
September 1979, Seiten 215-224, London, GB, J.M.
COTTON: "ITT 1240 digital exchange. Hardware for a
wide range of digital exchange sizes"

(73) Patentinhaber: Siemens Aktiengesellschaft,
Wittelsbacherplatz 2, D-8000 München 2 (DE)

(72) Erfinder: Schmid, Eberhard, Dr.-Ing., Schwabener
Strasse 10, D-8011 Poing (DE)

## Beschreibung

Die Erfindung betrifft eine Schaltungsanordnung für eine Fernsprechanlage nach dem Oberbegriff des Patentanspruchs 1.

Solche Ausgestaltungen für Fernsprechanlagen sind an sich allgemein üblich. Ersichtlich dient das erste Leitungspaar der Zufuhr der von der Zentrale an den einzelnen Fernsprechapparat zu führenden und von anderen Fernsprechapparaten über die Vermittlung gelieferten Sprachsignale sowie der Anrufsignale des betreffenden Fernsprechapparates, während das zweite Leitungspaar der Steuerung der Zentrale und dem Abgreifen der durch die von dem betreffenden Fernsprechapparat gelieferten Wählsignale bzw. Sprachsignale dient.

Da im allgemeinen zwischen der Zentrale und den peripheren Fernsprechapparaten beträchtliche und mittels entsprechender Kabel zu überwindende Entfernungen bestehen, ist auch eine erhebliche Gefahr für durch äußere Einflüsse hervorgerufene Betriebsstörungen gegeben. Vor allem können in diesen sogenannten Teilnehmerleitungen symmetrisch liegende Störspannungen aufgrund der Einwirkung von Hochspannungsleitungen, Fahrleitungen für elektrische Bahnen usw. – sogenannte Längsspannungen – stetig induziert werden. Es ist nun für die Ausbildung der Fernsprechanlagen allgemein vorgesehen, daß die normale Sprachübertragung zwischen den einzelnen Fernsprechapparaten und der Zentrale durch diese Längsspannungen keine merkliche Beeinträchtigung erleidet, sofern diese einen Grenzwert von z.B. 65 $V_{eff}$ nicht überschreiten. Weitere Störquellen können durch Gewitter, also Blitze, gegeben sein, welche ggf. die Teilnehmerleitungen durch zusätzliche Überspannungen belasten können. Dabei ist durch entsprechende Ausgestaltung eines primären Überspannungsschutzes im allgemeinen dafür gesorgt, daß die in diesem Fall auftretende verbliebene restliche Kurzzeit-Belastung durch Überspannung den Wert von 1,5 kV nicht überschreitet und lediglich zu einer Störung der Sprechsignale aber nicht zu einer weiteren Schädigung führen dürfen. Schließlich muß auch bei langdauernden Kurzschlüssen zwischen einer Telefonleitung und einer Netzleitung dafür gesorgt werden, daß es nicht zu Störungen der Kernteile der Zentrale oder gar zu deren Zerstörung kommen kann, selbst dann, wenn es zur Zerstörung peripherer Bestandteile kommen würde.

Ein seit langem übliches Sicherungsmittel bildet die Verwendung eines Differentialübertragers zur Sprachübertragung und zur Zweidraht/Vierdraht-Umwandlung. Auf diese Weise läßt sich eine galvanische Trennung der Teilnehmerleitungen (also der zu den einzelnen peripheren Fernsprechapparaten führenden Verbindungen) und dem Vermittlungssystem in der Zentrale erreichen.

Aus «Electrical Communication», Bd. 54, Nr. 3, 1979, S. 223 ist eine digitale Fernsprechanlage mit Transformator bekannt, bei der der Transformator für die Energie- und Signalübertragung und zur Isolation eingesetzt und ein mit dem Transformator verbundener elektronischer Hybrid-Steuerschaltkreis für die Zweidraht/Vierdraht-Umwandlung benutzt wird. Das Ausgleichsnetzwerk für die Umwandlung ist von drei vorbestimmten Werten durch Software auswählbar.

Im Zuge der Einführung digitaler Vermittlungssysteme (vgl. z.B. Proceedings of the IEEE, Vo. 68, No. 8, August 1980, S. 991 bis 1008) ist man bestrebt, die voluminösen und teuren Differentialübertrager durch elektronische integrierte Bausteine zu ersetzen, die zugleich auch die Funktionen «Speisen» und «Rufen» übernehmen. Die bisher jedoch hier zur Verfügung stehenden integrierten Schaltungen erfordern je teilnehmerseitigen Anschluß (also je peripheren Telefonapparat) aufgrund der dann fehlenden galvanischen Trennung besondere Schutzmaßnahmen gegen das Auftreten von Überspannungen. Solche Schutzmaßnahmen können z.B. durch die Verwendung von Schutzwiderständen und Diodenbrücken gegeben sein. Alle diese Schutzmaßnahmen haben aber den Nachteil, daß die dabei vorgesehenen Schutzwiderstände permanent Leistung verbrauchen und daß außerdem bei hohen externen zusätzlichen Belastungen, wie z.B. durch Blitzschläge, Stromstöße bis zu 50 A in die der Stromversorgung der peripheren Fernsprechapparate dienende Anlage, also in die sog. Amtsbatterie gelangen können.

Aus «International Switching Symposium», September 1981, ist der Beitrag «LSI Components for Digital Line Stages» mit der Beschreibung einer digitalen Fernsprechanlage mit einem gattungsgemäßen integrierten Hochvolt- und Niedervolt-Schaltungsteil bekannt, bei der ein Überspannungsschutz nicht integriert ist und das Hochvolt-Schaltungsteil eine Brückenschaltung zur Energie- und Signalübertragung enthält, während das Niedervolt-Schaltungsteil die Zweidraht/Vierdraht-Umwandlung durchführt.

Die Aufgabe, die während des Betriebes ständig auftretenden induzierten Längsspannungen zu beherrschen, verlangt erfahrungsgemäß einen beträchtlichen elektronischen Schaltungsaufwand. Dabei ist zu beachten, daß die bei den bisher zur Verfügung stehenden Lösungen verwendete elektronische Speiseschaltung mit symmetrischen Ausgleichsströmen bis zu 50 mA auf die Längsspannungen reagieren muß, so daß diese am teilnehmerseitigen Anschluß zusammenbrechen.

Es ist nun Aufgabe der vorliegenden Erfindung, einen anderen Weg aufzuzeigen, der die genannten Nachteile nicht aufweist und der weitere, im einzelnen noch näher darzustellende Vorteile mit sich bringt.

Diese Aufgabe wird erfindungsgemäß durch die Merkmale des kennzeichnenden Teils des Patentanspruchs 1 gelöst.

Weitere Ausgestaltungen der Erfindung sind in Unteransprüchen gekennzeichnet.

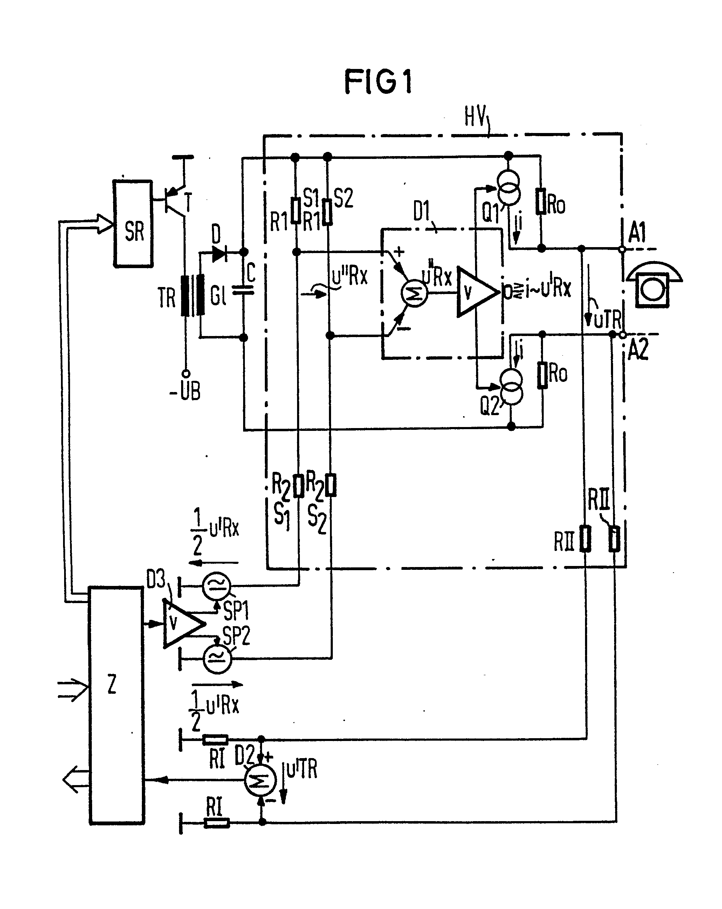

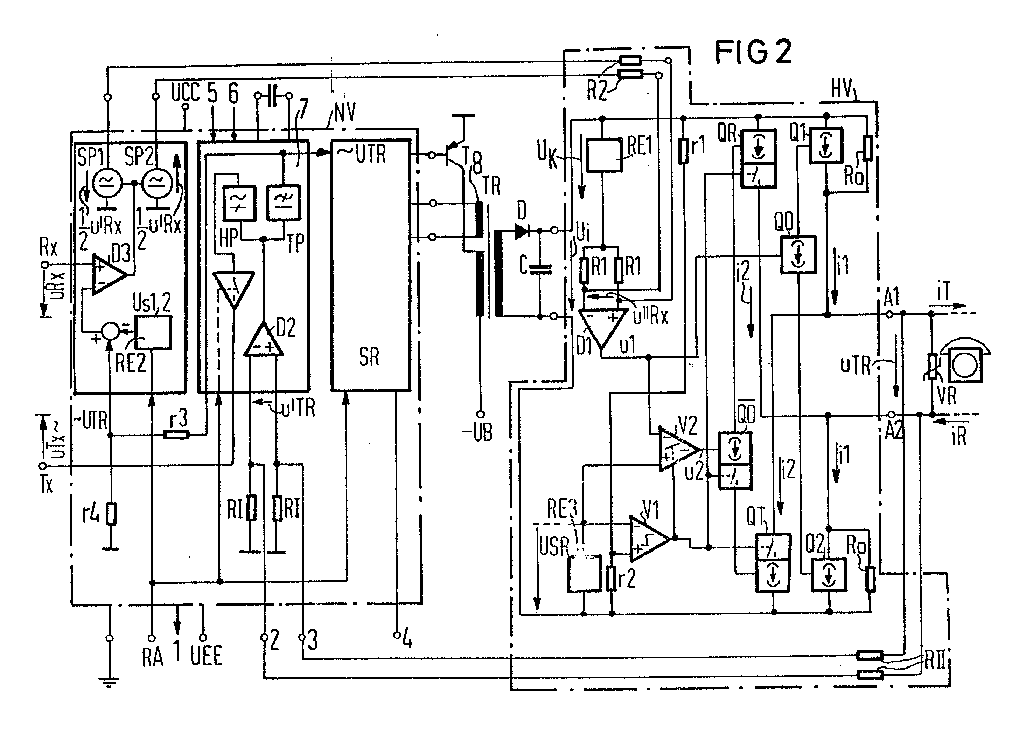

Eine der Erfindung entsprechende Ausgestaltung ist in Fig. 1 in vereinfachter Form dargestellt, während in Fig. 2 eine detaillierte Ausgestaltung gezeigt ist.

Das Wesen der Erfindung ist nun darin zu sehen, daß zur Reduktion der Verlustleistung Schaltregler in den Weg der Energieübertragung von der Amtsbatterie zur Teilnehmerleitung einbezogen werden und zur Energievermittlung vom Schaltregler in Richtung auf die beiden Anschlüsse des zugehörigen peripheren Fernsprechapparats eine galvanische Trennung über einen Transformator erfolgt. Die gegenseitige Signalübertragung erfolgt jedoch galvanisch gekoppelt über hochohmige Spannungsteiler.

Die Erzeugung der sinusförmigen Rufspannung von z. B. 65 $V_{eff}$ durch eine integrierte Halbleiterschaltung verlangt nun, daß diese Schaltung unter Verwendung einer·Technologie hergestellt worden ist, welche eine Spannungsfestigkeit bis zu 130 V gewährleistet. Im Interesse einer wirtschaftlichen Lösung sind nun bei der erfindungsgemäßen Fernsprechanlage die Funktionen für den jeweiligen peripheren Fernsprechapparat auf zwei Teilanlagen aufgeteilt, die jeweils zu einem monolithisch integrierten Baustein zusammengefaßt sind. Dabei enthält der erste IC-Baustein eine Hochvolt-Schaltung und bedient über die genannten beiden Anschlüsse die zu dem betreffenden peripheren Fernsprecher führenden zwei Leitungen.

Der Rest der zur Beaufschlagung des Fernsprechapparates durch die Zentrale bzw. der Zentrale durch den Fernsprechapparat dienenden Schaltungsteile ist im zweiten IC-Baustein zu einer Niedervolt-Schaltung zusammengefaßt, der unter Verwendung einer Standardtechnologie hergestellt ist. Es ist angebracht, in den Baustein für die Hochvolt-Schaltung nur diejenigen Bestandteile aufzunehmen, welche hinsichtlich ihrer Spannungsbeständigkeit in besonders großem Maß belastet sind. Der Niedervoltteil steuert die Hochvolt-Schaltung und enthält diejenigen Bestandteile des zwischen der Zentrale und dem einzelnen Fernsprechapparat vorzusehenden Schaltungsteils, die keiner besonderen Spannungsbelastung unterworfen sind.

Aufgrund der oben gegebenen Definition der Erfindung wird die Energie zum Hochvolt- bzw. Leistungsbaustein unter Vermittlung des genannten Transformators übertragen. Der Spannungsregler bildet einen Bestandteil des Niedervolt-IC-Bausteins. Er steuert bei einer bevorzugten Ausgestaltung der Erfindung unter Verwendung eines Leistungstransistors den Primärstrom des Transformators. Der Leistungstransistor ist als Hochvolt-Schalttransistor ausgebildet und z. B. als Einzeltransistor realisiert.

Die Signaleinkopplung und die Signalauskopplung am Hochvolt-Baustein erfolgt über zwei hochohmige, abgeglichene Brückenschaltungen, so daß der Vorteil der galvanischen Trennung im Transformator nahezu erhalten bleibt. Die bestehenden Signaldämpfungen können ohne weiteres im Niedervolt-Baustein ausgeglichen werden.

Wie in Fig. 1 dargestellt, ist bei einer Ausgestaltung der Erfindung der erste Anschluß A1 für die erste Ader der an den peripheren Fernsprecher zu legenden, zweiadrigen Fernleitung einerseits mit dem einen Anschluß eines Widerstands $R_0$ und andererseits mit dem Ausgang einer Stromquellenschaltung Q1 verbunden. Dasselbe gilt für die zum Fernsprecher führende zweite Ader der Fernleitung. Die zur Beaufschlagung des zweiten Anschlusses A2 vorgesehene steuerbare Stromquelle ist mit Q2 bezeichnet, während auch hier der Widerstand das Bezugszeichen $R_0$ hat. Die beiden Stromquellen Q1 und Q2 sind jeweils von einem der beiden gleichgroßen Widerstände $R_0$ überbrückt. Außerdem ist der Anschluß A1 über diesen Widerstand $R_0$ sowie der Anschluß A2 über den ihm zugeordneten Widerstand $R_0$ an je einen Ausgangsanschluß der – ihrerseits vom Transformator TR beaufschlagten Gleichrichterschaltung Gl gelegt. Schließlich ist der Anschluß A1 (im Gegensatz zum Anschluß A2) über den ihm zugeordneten Widerstand $R_0$ mit dem einen Ende der beiden – einander gleichen – Spannungsteiler S1, S2 verbunden.

Zwei weitere, ebenfalls einander gleiche Spannungsteiler sind jeweils durch die Serienschaltung eines am Bezugspotential (Masse) liegenden ersten Widerstands $R_I$ und einem zweiten Widerstand $R_{II}$ gegeben. Dabei stellt der eine dieser Spannungsteiler den Weg vom Anschluß A1 und der andere Spannungsteiler den Weg vom Anschluß A2 zur Zentrale Z dar, indem einerseits der nicht an Masse liegende Widerstand $R_{II}$ des betreffenden Spannungsteilers mit dem betreffenden zum Fernsprecher führenden Anschluß A1 bzw. A2 und andererseits über je einen Eingang eines gemeinsamen Differenzverstärkers D2 und damit über diesen Differenzverstärker D2 an die Zentrale Z angeschlossen ist.

Die Differenz der Potentiale der beiden zum Fernsprecher führenden Anschlüsse A1 und A2 steuert einen (nicht dargestellten) Sensor, der einerseits über einen in üblicher Weise ausgestalteten Schaltregler SR den Primärstrom des genannten Transformators TR steuert, der sekundärseitig zur Beaufschlagung der erstgenannten Spannungsteiler S1, S2 sowie der zu den beiden Anschlüssen A1 und A2 führenden Stromquellen Q1 und Q2 dient.

Die Verbindung zwischen dem Stellausgang des Schaltreglers SR und der Primärseite des besagten Transformators TR ist z. B. über einen Bipolartransistor T vom pnp-Typ gegeben, der in Emitterschaltung betrieben ist. Hierzu liegt beispielsweise der Emitter dieses Transistors T am Bezugspotential (Masse) und sein Kollektor über die Primärwicklung des besagten Transformators TR am Versorgungspotential $-U_B$.

Die Sekundärwicklung des besagten Transformators TR beaufschlagt die bereits genannte Gleichrichterschaltung Gl. Diese besteht z. B. aus einer Diode D, die mit dem einen Anschluß eines Kondensators C und über die Sekundärwicklung des Transformators TR mit dem anderen Anschluß dieses Kondensators verbunden ist. Im gezeichneten Beispielsfall ist hierbei die eine Ausgangsklemme der Sekundärwicklung des Transformators TR mit der Anode der Diode D verbunden, deren Kathode am einen Anschluß des Kondensators C liegt. Dieser Anschluß führt einerseits an den einen Endanschluß der beiden Spannungsteiler S1 und S2 und andererseits an die Stromquelle Q1 und über den Widerstand $R_o$ an den zum Fernsprecher führenden Anschluß A1. Der zweite Anschluß des Kondensators C ist hingegen an den Fußpunkt der anderen Stromquelle Q2 und über den dieser zugeordneten Widerstand $R_o$ an den zweiten zum peripheren Fernsprecher führenden Anschluß A2 gelegt.

Der Weg von der Zentrale Z zu dem peripheren Fernsprecher führt über die Serienschaltung je einer gesteuerten Spannungsquelle SP1 bzw. SP2 und dem einen Widerstand $R_2$ der beiden Spannungsteiler S1 und S2 an je einen Eingang eines gemeinsamen Differenzverstärkers D1, dessen beide Ausgänge jeweils eine der bereits genannten Stromquellen Q1 und Q2 steuern.

Die beiden einander gleichen gesteuerten Spannungsquellen SP1 und SP2 sind in üblicher Weise ausgestaltet (vgl. z.B. Tietze-Schenk «Halbleiter-Schaltungstechnik», 1980, S. 239) und liegen mit ihrem Fußpunkt am Bezugspotential und mit ihrem anderen Ausgangsanschluß an dem einen Ende des einen Endwiderstands R2 des jeweils zugeordneten Spannungsteilers S1, S2, dessen anderer Endwiderstand R1 von der Kathode der im Beispiel gezeigten Diode D als dem Ausgang der Gleichrichterschaltung GI auf der Sekundärseite des Transformators TR beaufschlagt ist. Der Teilerpunkt der – einander gleichen – Spannungsteiler S1 und S2 liegt, wie bereits festgestellt, an je einem Eingang des Differenzverstärkers D1.

Die Verbindung des – die für den peripheren Fernsprecher bestimmten Signale liefernden – Ausgangs der Zentrale Z in Richtung zum Fernsprecher führt über einen Verstärker D3, dessen einer Ausgang zur Steuerung der Spannungsquelle SP1 und dessen zweiter Ausgang zur Steuerung der Spannungsquelle SP2 und damit zur Beaufschlagung der beiden einander gleichen Spannungsteiler S1 und S2 vorgesehen ist. (In der weiteren Ausgestaltung gemäß Fig. 2 ist D3 als Differenzverstärker ausgeführt. Das ist jedoch im Sinne der Erfindung unwesentlich.)

Der Differenzverstärker D1, dessen beide Eingänge durch je einen der beiden einander gleichen Spannungsteiler S1 und S2 über dessen Teilerpunkt beaufschlagt sind, hat ebenfalls zwei Ausgänge, von denen der eine zur Steuerung der Stromquelle Q1 und der andere zur Steuerung der Stromquelle Q2 bestimmt ist, wie dies aus Fig. 1 entnehmbar ist. Die beiden Stromquellen Q1 und Q2 sind in üblicher Weise ausgestaltet und können z.B. durch einen Transistor oder durch einen Stromspiegel gegeben sein. – Entsprechend den oben gebrachten Gesichtspunkten ist in Weiterbildung der Erfindung eine monolithische Zusammenfassung (z.B. in der Technologie «Dielektrische Isolation») der beiden Stromquellen Q1 und Q2 mit dem sie steuernden Differenzverstärker D1, den sie überbrückenden Widerständen $R_o$, den Widerständen R1 und R2 der Spannungsteiler S1 und S2 und der beiden Widerstände $R_{II}$ des zweiten Teilerpaars zu einem Hochvolt-Baustein HV vorgesehen, dem gegebenenfalls noch die Diode D und der Transistor T angehören können (obwohl der Transistor T schaltungsmäßig keine unmittelbare Verbindung zu den genannten Teilen des Hochvolt-Bausteins aufweist). Die restlichen Teile, d.h. die Widerstände $R_I$ der Spannungsteiler, die den Weg vom peripheren Fernsprecher zur Zentrale Z bilden, die gesteuerten Spannungsquellen SP1, SP2, die Verstärker D2 und D3 sowie der Schaltregler SR können ihrerseits ebenfalls mit weiteren Teilen der Zentrale Z monolithisch zu einem Niedervolt-Baustein zusammen gefaßt sein. Extern sind dann nur noch wenige Komponenten, wie z.B. der Transformator TR und der Kondensator C.

In Fig. 2 ist zur weiteren Verdeutlichung der Anwendung eine weitere Ausgestaltung der Erfindung gezeigt, deren Prinzip in vereinfachter Form bereits in Fig. 1 vorgesehen ist.

Da nur beim Ruf-Vorgang die Teilnehmerleitung mit einem Gesamtstrom wechselnder Polarität beaufschlagt ist, werden aus Gründen der Wirtschaftlichkeit gesteuerte Stromquellen Q1 und Q2 vorgesehen, die ausschließlich nur zu einer Stromflußrichtung fähig sind. Die wechselnde Polarität des Stroms beim Rufvorgang wird durch Zuschaltung der weiteren Stromquellen $Q_R$ und $Q_T$ erreicht. Das ausschließlich nur beim Ruf-Vorgang stattfindende Zuschalten erfolgt aus Verlustleistungsgründen und ist durch die symbolischen Schalter in den Stromquellen der Fig. 2 dargestellt.

Da beim Ruf-Vorgang erheblich höhere Spannungswerte an die Teilnehmerleitungen zu legen sind, als dies bei der Sprachübertragung der Fall ist, ist dafür auch eine wesentlich höhere Versorgungsspannung $U_i$ des Hochvoltteils HV erforderlich. Dies wird durch Beeinflussung des Schaltreglers bei der Rufanforderung RA erreicht, so daß z.B. $U_i$ = 70 V bei der Sprachübertragung auf $U_i$ = 120 V beim Ruf-Vorgang gesteigert wird.

Eine erhöhte innere Versorgungsspannung $U_i$ wird im Hochvoltteil HV über einen Sensor (bestehend aus dem Spannungsteiler $r_1$, $r_2$ und dem Komparator $V_1$) im Vergleich mit der Referenzspannung $U_{SR}$ der Referenz $R_{E3}$ als ausschließlich für den Ruf-Vorgang als zuständig erkannt und dazu benutzt, um die zusätzlichen Stromquellen $Q_R$ und $Q_T$ mit einem über $U_{SR}$ geeignet gewählten Ruhestrom anzuschalten. Damit erspart man sich eine weitere galvanische Verbindung zum Hochvoltteil HV, die sonst zur Steuerung erforderlich wäre. Die Form der Ansteuerung der Stromquellen $Q_1$, $Q_2$, $Q_R$, $Q_T$ spielt für die vorliegende Erfindung an sich keine Rolle und könnte z.B. auch entsprechend Fig. 1 oder, wie aus Fig. 2 ersichtlich, über weitere Hilfsstromquellen $Q_o$ und $\bar{Q}_o$ erfolgen.

Weiter ist in Fig. 2 der Regelkreis des Schaltreglers SR erkennbar. Die Spannungsteiler, bestehend aus den Widerständen 1 × $R_I$ und 2 × $R_{II}$, greifen an den zum peripheren Fernsprecher führenden Klemmen A1 und A2 die Leitungsspannungen der Teilnehmerleitungen ab. Die vom Differenzverstärker $D_2$ abgegriffene Spannung $U'_{TR}$ ist proportional zur Spannung $U_{TR}$ zwischen den Klemmen A1 und A2. Der zeitliche Mittelwert davon, nach dem aus Fig. 2 im Niedervoltteil NV ersichtlichen Tiefpaß TP abgegriffen, wird so zur Steuerung des Schaltreglers SR benutzt, daß $U_i$–$U_{TR}$ = const, d.h., daß der Mittelwert der Spannungen über den Stromquellen Q1, Q2 und ggf. $Q_R$, $Q_T$ gerade hinreichend groß für deren volle Funktionsfähigkeit ist. Falls erforderlich, kann für die Regeltätigkeit eine zusätzliche Sensorwicklung auf dem Transformator TR vorgesehen sein, über die dann der Schaltregler SR Aufschluß über die sich ergebende Spannung $U_i$ erhält.

Die an den Klemmen A1, A2 liegenden Sprachsignale sind ebenfalls am Ausgang des Differenzverstärkers $D_2$ abgreifbar und werden nach Entfernung der Gleichstromanteile mittels des – ebenfalls im Niedervoltteil NV vorgesehenen – Hochpasses HP am Ausgang $T_x$ abgegeben.

Die Erzeugung der Sprechströme in $Q_1$, $Q_2$ und ggf. der Ruf-Wechselströme im Zusammenwirken mit $Q_R$ und $Q_T$ wird von der Eingangsklemme $R_x$ über den Differenzverstärker D3, die gesteuerten Spannungsquellen SP1, SP2 usw. gesteuert.

Zusätzlich ist in Fig. 2 ein zweiter Regelkreis aufgenommen, der im Normalbetrieb bezüglich des Gleichstromverhaltens der Klemmen A1, A2 wirksam ist und dafür sorgt, daß sich die Klemmen A1, A2 bezüglich einem angeschlossenen Verbraucher gleichstrommäßig wie eine Batterie mit vorgegebener Leerlaufspannung und Innenwiderstand verhalten. Die Eigenschaften dieser äquivalenten Batterie sind durch Wahl der Referenzspannung $U_{s1}$ und durch geeignet gesetzte Verstärkungsfaktoren bzw. Teilfaktoren im Regelkreis, in Fig. 2 durch r3, r4 symbolisiert, einzustellen. Die zu regelnde Größe, nämlich der Gleichspannungswert von $U_{TR}$ zwischen den zum peripheren Telefon führenden Klemmen A1, A2, ist – lediglich proportional verändert – bereits für die Steuerung des Schaltreglers SR aufbereitet und steht am Ausgang des bereits genannten Tiefpasses TP zur Verfügung. Über die Widerstände r3, r4 – zur Andeutung einer evtl. vorhandenen weiteren proportionalen Veränderung – wird mit Einbezug der Referenz RE2 über den invertierenden Eingang des Differenzverstärkers D3 und nachfolgend, dem von $U_{Rx}$ erzeugten Signal überlagert, der Regelkreis geschlossen.

Im Falle des Ruf-Vorgangs wird gegebenenfalls die Referenz RE2 auf die Spannung $U_{s2}$ umgeschaltet. Damit kann, falls erforderlich, bewirkt werden, daß der an den Klemmen A1, A2 entstehenden Rufwechselspannung eine Gleichspannungskomponente geeigneter Größe überlagert ist.

Über die Referenz RE1 kann schließlich durch Wahl eines geeigneten Spannungswertes $U_k$ eine gleichstrommäßige Unsymmetrie erreicht werden, so daß die Zweidrahtadern A1, A2 aus Gründen des Korrosionsschutzes negativ gegen Erde sind.

Ergänzend ist im Hinblick auf Fig. 2 noch folgendes zu bemerken:

a) Der Schaltregler SR enthält eine Pulsbreitensteuerung für Aktivbetrieb, wobei, wie bereits angedeutet, $U_i$–$U_{TR}$ = const ist.

b) Die mit RA bezeichnete Klemme dient der Rufanforderung.

c) Die Trennung von DC/AC-Signal sowie die Steuerung des Schaltreglers findet durch den mit 7 bezeichneten Schaltungsteil statt, der die beiden Filter HP und TP sowie den Differenzverstärker D2 in der aus der Zeichnung ersichtlichen Schaltweise enthält.

d) Weitere Funktionen dieses Schaltungsteils sind die Strombegrenzung und die Erzielung einer aktiven Speisecharakteristik.

e) Die Spannung $-U_B$ an der Primärwicklung des Transformators TR beträgt z.B. $-42 \ldots -58$ V.

f) Die bereits erwähnte Sensorwicklung 8 auf dem Transformator TR kann auch für die Energieübertragung bei «Power-down» verwendet werden.

g) Bekanntlich benötigt der in üblicher Weise aufgebaute Schaltregler SR, z.B. ein Sperrwandler, ein Taktsignal. Wird dieses nicht intern erzeugt, so muß in diesem Fall ein Eingang 4 für ein Taktsignal vorgesehen sein, der z.B. mit einer Taktfrequenz von 32 kHz beaufschlagt wird.

h) $U_{CC}$ und $U_{EE}$ sind die Versorgungspotentiale für den Niedervolt-Baustein NV.

i) Das Bezugszeichen 1 zeigt einen Ausgang für die Schleifenindikation, 6 die externe Einstellbarkeit der Strombegrenzung und 5 der aktiven Speisecharakteristik im Niedervolt-Baustein NV an. An die Klemmen 2 und 3 des Niedervolt-Bausteins NV sind Potentiale für Testzwecke abgreifbar.

Als wesentlicher Vorteil der Erfindung ist abschließend zu verzeichnen, daß ohne Schaltungsaufwand die Störungen durch Längsspannungen beherrscht werden können. Als Sekundärschutz gegen Blitzbeeinflussungen sind die Zweidrahtadern, also die beiden zum peripheren Fernsprecher führenden Anschlüsse A1, A2, lediglich mit einem Varistor VR (vgl. Fig. 2) gegeneinander zu verschalten, der bekanntlich billig zu beschaffen ist. Bei Dauerkurzschluß mit dem Versorgungsnetz (220 V) ist sichergestellt, daß höchstens der Hochvolt-Baustein HV aber nicht weitere Schaltungsteile der Zentrale Z in Mitleidenschaft gezogen oder gar vernichtet werden können.

Die Anzahl der hochohmigen galvanischen Verbindungen zur Fernsprechanlage gemäß der Erfindung ist auf vier beschränkt. Der Vorteil gegenüber der konventionellen Lösung besteht darin, daß nur ein kleiner, einfacher Transformator ausreicht, wobei trotzdem die Informationen über die Gleichspannungsverhältnisse der Zweidrahtadern, also der beiden Anschlüsse A1 und A2, für Testzwecke im Vermittlungssystem der Zentrale Z zur Verfügung stehen. Übrige Funktionen, wie Nachbildung und Wechselstromimpedanz entstehen im Zusammenwirken mit weiteren integrierten Bausteinen für die Fernsprechtechnik.

**Patentansprüche**

1. Schaltungsanordnung für eine Fernsprechanlage aus einer Zentrale und zugehörigen Fernsprechapparaten, an die jeweils ein zugehöriger Fernsprechapparat über zwei Leitungen angeschlossen ist und die Mittel zur Energieversorgung und zur Aktivierung des zugehörigen Fernsprechapparates durch die Zentrale sowie Mittel zur Zustands- und Signalübertragung zwischen dem zugehörigen Fernsprechapparat und der Zentrale aufweist, wobei ein integriertes Niedervolt-Schaltungsteil sowie ein integriertes Hochvolt-Schaltungsteil vorgesehen sind und die Zustands- und Signalübertragung über zwei Leitungspaare erfolgt, und wobei der zugehörige Fernsprechapparat an das integrierte Hochvolt-Schaltungsteil angeschlossen ist, gekennzeichnet durch einen Schaltregler (SR) im integrierten Niedervolt-Schaltungsteil (NV), durch einen vom Schaltregler (SR) des Niedervolt-Schaltungsteils (NV) gesteuerten, mit dem Hochvolt-Schaltungsteil (HV) verbundenen Transformator (TR) zur galvanisch getrennten Energieversorgung des Hochvolt-Schaltungsteils (HV) und durch je zwei hochohmige Spannungsteiler (S1, S2, R1, R2, RI, RII) zur gegenseitigen Signalübertragung, die das Niedervolt- und Hochvolt-Schaltungsteil (NV, HV) galvanisch miteinander koppeln, so daß die Energieübertragung von der Signalübertragung getrennt erfolgt.

2. Schaltungsanordnung nach Anspruch 1, dadurch gekennzeichnet, daß der Transformator (TR) sekundärseitig mit den Anschlußleitungen (A1, A2) des zugehörigen Fernsprechapparates über zwei gleiche Widerstände (Ro), über Signalstromquellen (Q1, Q2) und über schaltbare Rufstromquellen (QR, QT) verbunden ist, daß die Signalstromquellen (Q1, Q2) durch zwei gesteuerte Spannungsquellen (SP1, SP2) und zwei hochohmige Spannungsteiler (S1, S2, R1, R2) gesteuert werden, daß die Rufstromquellen (QR, QT) über einen auf der Sekundärseite des Transformators (TR) angeschlossenen Spannungssensor (r1, r2, RE3, V1, V2) gesteuert werden und daß zwei weitere hochohmige Spannungsteiler (RI, RII) von den Anschlußleitungen (A1, A2) des zugehörigen Fernsprechapparates auf das Niedervolt-Schaltungsteil (NV) rückgekoppelt sind.

3. Schaltungsanordnung nach Anspruch 1 und 2, dadurch gekennzeichnet, daß die zwei gesteuerten Spannungsquellen (SP1, SP2) von der Zentrale (Z) gesteuert werden, invertierte Spannungen (u'Rx/2) liefern und in Serie zu jeweils einem hochohmigen, aus zwei Widerständen (R1, R2) bestehenden Spannungsteiler (S1, S2) geschaltet sind, wobei die freien Endanschlüsse der gesteuerten Spannungsquellen (SP1, SP2) geerdet, die freien Endanschlüsse der hochohmigen Spannungsteiler (S1, S2, R1, R2) miteinander und mit einem sekundärseitigen Anschluß des Transformators (TR) verbunden und die Teilerpunkte der hochohmigen Spannungsteiler (S1, S2, R1, R2) jeweils an einen Eingang eines Differenzverstärkers (D1) gelegt sind, dessen Ausgang die Signalstromquellen (Q1, Q2) steuert.

4. Schaltungsanordnung nach Anspruch 1 bis 3, dadurch gekennzeichnet, daß die miteinander verbundenen freien Endanschlüsse der hochohmigen Spannungsteiler (S1, S2, R1, R2) über eine Referenzspannungsquelle (RE1) mit einem sekundärseitigen Anschluß des Transformators (TR) verbunden sind.

5. Schaltungsanordnung nach Anspruch 1 bis 4, dadurch gekennzeichnet, daß jeweils die Parallelschaltung eines der zwei gleichen Widerstände (Ro) und einer Signalstromquelle (Q1) zwischen einem sekundärseitigen Anschluß des Transformators (TR) und einer Anschlußleitung (A1, A2) des zugehörigen Fernsprechapparates angeordnet ist.

6. Schaltungsanordnung nach Anspruch 1 bis 5, dadurch gekennzeichnet, daß die zwei weiteren hochohmigen Spannungsteiler (RI, RII) aus je zwei Widerständen (RI, RII) bestehen, jeweils ein gemeinsamer Endanschluß der weiteren hochohmigen Spannungsteiler (RI, RII) geerdet, der jeweils andere Endanschluß mit je einer der beiden Anschlußleitungen (A1, A2) des zugehörigen Fernsprechapparates verbunden und jeweils ein Teilerpunkt an je einen Eingang eines zweiten Differenzverstärkers (D2) gelegt ist, dessen Ausgang einerseits einen Eingang des Schaltreglers (SR) steuert, andererseits auf die beiden von der Zentrale (Z) gesteuerten Spannungsquellen (SP1, SP2) rückgekoppelt und weiterhin mit der Zentrale (Z) verbunden ist.

7. Schaltungsanordnung nach Anspruch 1 bis 6, dadurch gekennzeichnet, daß der zweite Differenzverstärker (D2) ausgangsseitig über einen Tiefpaß (TP) einen Eingang des Schaltreglers (SR) steuert, über den Tiefpaß (TP) und eine Vergleichseinrichtung (r3, r4, RE2, +, −) an einen Eingang eines dritten Differenzverstärkers (D3) gelegt ist, dessen anderer Eingang von der Zentrale (Z) gesteuert wird und dessen Ausgang die zwei gesteuerten Spannungsquellen (SP1, SP2) steuert und daß der zweite Differenzverstärker (D2) ausgangsseitig über einen Hochpaß (HP) mit der Zentrale (Z) verbunden ist.

8. Schaltungsanordnung nach Anspruch 1 bis 7, dadurch gekennzeichnet, daß der Schaltregler (SR) einen weiteren Steuereingang für ein Rufsignal (RA, RA1) und einen Stellausgang aufweist, der über einen in Emitterschaltung betriebenen Bipolartransistor (T) mit einer Primärwicklung des Transformators (TR) verbunden ist.

9. Schaltungsanordnung nach Anspruch 1 bis 8, dadurch gekennzeichnet, daß der weitere Steuereingang des Schaltreglers (SR) für das Rufsignal (RA, RA1) an eine umschaltbare Referenzspannungsquelle (Re2) der vergleichseinrichtung (r3, r4, RE2, +, −) angeschlossen ist.

10. Schaltungsanordnung nach Anspruch 1 bis 9, dadurch gekennzeichnet, daß der Transformator (TR) sekundärseitig eine Gleichrichterschaltung (G1, D, C) mit einer ausgangsseitigen gegenpoligen Gleichspannung (Ui) aufweist.

11. Schaltungsanordnung nach Anspruch 1 bis 10, dadurch gekennzeichnet, daß der Transformator (TR) eine Sensorwicklung (8) besitzt, deren Anschlüsse auf Eingänge des Schaltreglers (SR) rückgekoppelt sind.

12. Schaltungsanordnung nach Anspruch 1 bis 11, dadurch gekennzeichnet, daß die Signalstromquellen (Q1, Q2), die zwei gleiche Widerstände (Ro) die schaltbaren Rufstromquellen (QR, QT), der Spannungssensor (r1, r2, RE3, V1, V2), die hochohmigen Spannungsteiler (S1, S2, R1, R2) und mindestens die mit den Anschlußleitungen (A1, A2) des zugehörigen Fernsprechapparates verbundenen Widerstände (RII) der weiteren Spannungsteiler (RI, RII) monolithisch integriert zum Hochvolt-Schaltungsteil (HV) zusammengefaßt sind.

13. Schaltungsanordnung nach Anspruch 1 bis 12, dadurch gekennzeichnet, daß der Schaltungsregler (SR), die zwei gesteuerten Spannungsquellen (SP1, SP2), der zweite (D2) und dritte Differenzverstärker (D3), der Tiefpaß (TP) und der Hochpaß (HP) sowie die Vergleichseinrichtung (r3, r4, RE2, +, −) monolithisch integriert zum Niedervolt-Schaltungsteil (NV) zusammengefaßt sind.

**Claims**

1. Circuit arrangement for a telephone system consisting of a local exchange and associated telephone sets, to which in each case an associated telephone set is connected via two lines and which exhibits means for supplying power and for activating the associated telephone set by means of the local exchange and menas for transmitting status and signals between the associated telephone set and the local exchange, in which arrangement an intergrated low-voltage circuit section and an integrated high-voltage circuit section are provided and the status and signals are transmitted via two line pairs, and in which arrangement the associated telephone set is connected to the integrated high-voltage circuit section, characterized by a switched-mode regulator (SR) in the integrated low-voltage circuit section (NV), by a transformer (TR) which is controlled by the switched-mode regulator (SR) of the low-voltage circuit section (NV) and connected to the high-voltage circuit section (HV) for supplying the high-voltage circuit section (HV) with power by electrically isolated means, and by two high-resistance voltage dividers (S1, S2, R1, R2, RI, RII) each for mutual signal transmission which electrically couple the low-voltage and high-voltage circuit section (NV, HV) to one another so that the power is transmitted separately from the signal.

2. Circuit arrangement according to Claim 1, characterized in that the transformer (TR) is connected on the secondary side to the subscriber lines (A1, A2) of the associated telephone set via two equal resistors (Ro), via signal current sources (Q1, Q2) and via switchable ringing current sources (QR, QT), that the signal current sources (Q1, Q2) are controlled by two controlled voltage sources (SP1, SP2) and two high-resistance voltage dividers (S1, S2, R1, R2), that the ringing current sources (QR, QT) are controlled via a voltage sensor (r1, r2, RE3, V1, V2) connected to the secondary side of the transformer (TR) and that two further high-resistance voltage dividers (RI, RII) are coupled back from the subscriber lines (A1, A2) of the associated telephone set to the low-voltage circuit section (NV).

3. Circuit arrangement according to Claim 1 and 2, characterized in that the two controlled voltage sources (SP1, SP2) are controlled by the local exchange (Z), supply inverted voltages (u'Rx/2) and are connected in series with in each case one high-resistance voltage divider (S1, S2), consisting of two resistors (R1, R2), in which arrangement the free terminals of the controlled voltage sources (SP1, SP2) are earthed, the free terminals of the high-resistance voltage dividers (S1, S2, R1, R2) are connected to one another and to a connection on the secondary side of the transformer (TR) and the divider junctions of the high-resistance voltage dividers (S1, S2, R1, R2) are in each case connected to one input of a differential amplifier (D1) the output of which controls the signal current sources (Q1, Q2).

4. Circuit arrangement according to Claim 1 to 3, characterized in that the free terminals of the high-resistance voltage dividers (S1, S2, R1, R2), which are connected to one another, are connected via a reference voltage source (RE1) to a connection on the secondary side of the transformer (TR).

5. Circuit arrangement according to Claim 1 to 4, characterized in that in each case the parallel circuit of one of the two equal resistors (Ro) and of a signal current source (Q1) is arranged between a connection on the secondary side of the transformer (TR) and a subscriber line (A1, A2) of the associated telephone set.

6. Circuit arrangement according to Claim 1 to 5, characterized in that the two further high-resistance voltage dividers (RI, RII) consist of two resistors (RI, RII) each, in each case a common terminal of the further high-resistance voltage dividers (RI, RII) is earthed, the other terminal in each case is connected to one of the two subscriber lines (A1, A2) each of the associated telephone set and in each case a divider junction is connected to one input each of a second differential amplifier (D2) the output of which controls, on the one hand, an input of the switched-mode regulator (SR) and is coupled back, on the other hand, to the two voltage sources (SP1, SP2) controlled by the local exchange (Z) and, furthermore, is connected to the local exchange (Z).

7. Circuit arrangement according to Claim 1 to 6, characterized in that the second differential amplifier (D2) controls at the output an input of the switched-mode regulator (SR) via a low-pass filter (TP), is connected via the low-pass filter (TP) and a comparison device (r3, r4, RE2, +, −) to one input of a third differential amplifier (D3) the other input of which is controlled by the local exchange (Z) and the output of which controls the two controlled voltage sources (SP1, SP2) and that the second differential amplifier (D2) is connected at the output to the local exchange (Z) via a high-pass filter (HP).

8. Circuit arrangement according to Claim 1 to 7, characterized in that the switched-mode regulator (SR) exhibits a further control input for a ringing signal (RA, RA1) and an adjusting output which is connected to a primary winding of the transformer (TR) via a bipolar transistor (T) operated as a common-emitter circuit.

9. Circuit arrangement according to Claim 1 to 8, characterized in that the further control input of the switched-mode regulator (SR) for the ringing signal (RA, RA1) is connected to a switchable reference voltage source (RE2) of the comparison device (r3, r4, RE2, +, −).

10. Circuit arrangement according to Claim 1 to 9, characterized in that the transformer (TR) exhibits on the secondary side a rectifier circuit (G1, D, C) having a direct voltage (Ui) of opposite polarities at the output.

11. Circuit arrangement according to Claim 1 to 10, characterized in that the transformer (TR) has a sensor winding (8) the connections of which are coupled back to inputs of the switched-mode regulator (SR).

12. Circuit arrangement according to Claim 1 to 11, characterized in that the signal current sources (Q1, Q2), the two equal resistors (Ro), the switchable ringing current sources (QR, QT), the voltage sensor (r1, r2, RE3, V1, V2), the high-resistance voltage dividers (S1, S2, R1, R2) and at least the resistors (RII) of the further voltage dividers (RI, RII), connected to the subscriber lines (A1, A2) of the associated telephone set are combined monolithically to form the high-voltage circuit section (HV).

13. Circuit arrangement according to Claim 1 to 12, characterized in that the switched-mode regulator (SR), the two controlled voltage sources (SP1, SP2), the second (D2) and third differential amplifier (D3), the low-pass filter (TP) and the high-pass filter (HP) and the comparison device (r3, r4, RE2, +, −) are combined monolithically integrated to form the low-voltage circuit section (NV).

**Revendications**

1. Montage pour une installation téléphonique constituée par un central et des appareils téléphoniques associés, auquel des appareils téléphoniques associés sont raccordés respectivement par l'intermédiaire de deux lignes et qui comporte des moyens pour alimenter en énergie et activer l'appareil téléphonique associé, par l'intermédiaire du central, ainsi que des moyens pour réaliser la transmission d'états et de signaux entre l'appareil téléphonique associé et le central, et dans lequel il est prévu un élément de circuit intégré à basse tension et un élément de circuit intégré à haute tension, et la transmission d'états et de signaux s'effectue par l'intermédiaire de deux couples de lignes, et dans lequel l'appareil téléphonique associé est raccordé à l'élément de circuit intégré à haute tension, caractérisé par un régulateur de commutation (SR) situé dans l'élément de circuit intégré à basse tension (NV), un transformateur (TR), commandé par le régulateur de tension (SR) et l'élément de circuit à basse tension (NV) et relié à l'élément de circuit à haute tension (HV) et servant à réaliser l'alimentation en énergie, séparée galvaniquement, de l'élément de circuit à haute tension (HV), et par deux diviseurs respectifs de tension (S1, S2, R1, R2, RI, RII), qui possèdent une forte valeur ohmique, servent à transmettre réciproquement les signaux et accouplent, galvaniquement entre eux, l'élément de circuit à basse tension et l'élément de circuit à haute tension (NV, HV), de sorte que la transmission en énergie s'effectue séparément de la transmission des signaux.

2. Montage suivant la revendication 1, caractérisé par le fait que le transformateur (TR) est relié, côté secondaire, aux lignes de raccordement (A1, A2) de l'appareil téléphonique associé, par l'intermédiaire de deux résistances (Ro), par des sources de courant de signaux (Q1, Q2) et par des sources commutables de courant d'appel (QR, QT), que les sources de courant de signaux (Q1, Q2) sont commandées par deux sources de tension commandées (SP1, SP2) et par deux diviseurs de tension (S1, S2, R1, R2) possédant une forte valeur ohmique, que les sources de courant d'appel (QR, QT) sont commandées par l'intermédiaire d'un détecteur de tension (r1, r2, RE3, V1, V2), raccordé au côté secondaire du transformateur (TR), et que deux autres diviseurs de tension (RI, RII) possédant une forte valeur ohmique sont couplés par réaction à l'élément de circuit à basse tension (NV), au moyen des lignes de raccordement (A1, A2) d'appareils téléphoniques associés.

3. Montage suivant les revendications 1 et 2, caractérisé par le fait que les deux sources de tension commandées (SP1, SP2) sont commandées par le central (Z), délivrent des tensions inversées (u'Rx/2) et sont branchées en série avec des diviseurs respectifs de tension (S1, S2) présentant une forte valeur ohmique et constitués par deux résistances (R1, R2), les bornes d'extrémité libres des sources de tension commandées (SP1, SP2) sont raccordées à la terre, les bornes d'extrémité libres des diviseurs de tension (S1, S2, R1, R2) possédant une forte valeur ohmique, sont reliées entre elles et à une borne, située du côté secondaire, du transformateur (TR), et les points de division des diviseurs de tension (S1, S2, R1, R2) possédant une forte valeur ohmique sont raccordés respectivement à une entrée d'un amplificateur différential (D1), dont la sortie commande les sources de courant de signaux (Q1, Q2).

4. Montage suivant les revendications 1 à 3, caractérisé par le fait que les bornes d'extrémité libres, reliées entre elles, des diviseurs de tension (S1, R1, R2) possédant une forte valeur ohmique sont reliées à une borne, située du côté secondaire, du transformateur (TR).

5. Montage suivant les revendications 1 à 4, caractérisé par le fait que le montage en parallèle formé par l'une des deux résistances identiques (Ro) et par une source de courant de signal (Q), est branché respectivement entre une borne, située du côté secondaire, du transformateur (TR), et une ligne de raccordement (A1, A2) de l'appareil téléphonique associé.

6. Montage suivant l'une des revendications 1 à 4, caractérisé par le fait que les deux autres diviseurs de tension (RI, RII) possèdent une forte valeur ohmique sont constitués par deux résistances respectives (RI, RII), qu'une borne d'extrémité commune respective des autres diviseurs de tension (RI, RII) possédant und forte valeur ohmique est raccordée à la terre, que l'autre borne respective d'extrémité est reliée à l'une respective des deux lignes de raccordement (A1, A2) de l'appareil téléphonique associé, et qu'un point des diviseurs est raccordé respectivement à une entrée d'un second amplificateur différentiel (D2), dont la sortie d'une part commande l'entrée du régulateur de commutation (SR) et d'autre part est couplée par réaction aux deux sources de tension (SP1, SP2) commandées par le central (Z) et est, en outre, reliée au central (Z).

7. Montage suivant les revendications 1 à 6, caractérisé par le fait que le second amplificateur différentiel (D2) commande, sur sa sortie, une entrée du régulateur de commutation (SR), par l'intermédiaire d'un filtre passe-bas (TP), et est raccordé, par l'intermédiaire du filtre passe-bas (TP) et d'un dispositif comparateur (r3, r4, RE2, +, −) à une entrée d'un troisième amplificateur différentiel (D3), dont l'autre entrée est commandée par le central (Z) et dont la sortie commande deux sources de tension commandées (SP1, SP2), et que le second amplificateur différentiel (D2) est relié, côté sortie, au central (Z), par l'intermédiaire d'un filtre passe-haut (HP).

8. Montage suivant les revendications 1 à 7, caractérisé par le fait que le régulateur de commutation (SR) possède une autre entrée de commande pour un signal d'appel (RA, RA1) et une sortie de réglage, qui est reliée, par l'intermédiaire d'un transistor bipolaire (T) monté en émetteur commun, à un enroulement primaire du transformateur (TR).

9. Montage suivant les revendications 1 à 8, caractérisé par le fait que l'autre entrée de commande du régulateur de commutation (SR) pour le signal d'appel (RA, RA1), est raccordée à une source commutable de tension de référence (RE2) du dispositif comparateur (r3, r4, RE2, +, −).

10. Montage suivant les revendications 1 à 9, caractérisé par le fait que le transformateur (TR) comporte, côté secondaire, un circuit redresseur (G1, D, C) délivrant, au niveau de sa sortie, une tension continue (Ui) de polarité opposée.

11. Montage suivant les revendications 1 à 10, caractérisé par le fait que le transistor (TR) possède un enroulement de détection (8), dont les bornes sont couplées par réaction à des entrées du régulateur de commutation (SR).

12. Montage suivant les revendications 1 à 11, caractérisé par le fait que les sources de courant de signaux (Q1, Q2), les deux résistances identiques (Ro), les sources commutables de courant d'appel (QR, QT), le détecteur de tension (r1, r2, RE3, V1, V2), les diviseurs de tension (S1, S2, R1, R2) possédant une forte valeur ohmique et au moins les résistances (RII) de l'autre diviseur de tension (RI, RII), reliées aux lignes de raccordement (a1, a2) de l'appareil téléphonique associé, sont réunies à l'élément de circuit à haute tension (HV), en étant intégrées de façon monolithique.

13. Montage suivant l'une des revendications 1 à 12, caractérisé par le fait que le régulateur de commutation (SR), les deux sources de tension commandées (SP1, SP2), le second amplificateur différentiel (D2) et le troisième amplificateur différentiel (D3), le filtre passe-bas (TP) et le filtre passe-haut (SP) ainsi que le dispositif comparateur (r3, r4, RE2, +, −) sont réunis à l'élément de circuit à basse tension (NV) en étant intégrés de façon monolithique.

# FIG 1

FIG 2